Europäisches Patentamt

European Patent Office

Office européen des brevets

(19)

(11) Publication number: **0 126 566**
**B1**

(12) **EUROPEAN PATENT SPECIFICATION**

(45) Date of publication of patent specification: **14.09.88**

(51) Int. Cl.⁴: **G 01 G 3/14**

(21) Application number: **84302909.1**

(22) Date of filing: **01.05.84**

(54) **Load cell apparatus.**

(30) Priority: **19.05.83 US 496053**

(43) Date of publication of application:
**28.11.84 Bulletin 84/48**

(45) Publication of the grant of the patent:
**14.09.88 Bulletin 88/37**

(84) Designated Contracting States:
**BE CH DE FR GB IT LI SE**

(56) References cited:
**EP-A-0 065 176**
**FR-A-2 466 004**
**GB-A-1 534 276**
**US-A-4 261 429**

(73) Proprietor: **Toledo Scale Corporation**
**350 W Wilson Bridge Road**
**Columbus, Ohio 43085 (US)**

(72) Inventor: **Griffen, Neil C.**
**3435 Barr**
**Columbus Ohio 43224 (US)**
Inventor: **Patoray, Stephen A.**
**6475 Ponset Street**
**Dublin Ohio, 43017 (US)**

(74) Representative: **Skinner, Michael Paul et al**
**c/o Swindell & Pearson 48 Friar Gate**
**Derby DE1 1GY (GB)**

Courier Press, Leamington Spa, England.

EP 0 126 566 B1

## Description

The present invention relates to weighing apparatus comprising a plate, a beam formed at each of a plurality of locations by slots cut in the plate, each beam having a fixed end merging with the plate and having another end, and strain sensing means on each beam, a support member connected to the other end of each beam, force transmitting means coupled to each support member, and foot means supporting the weighing apparatus.

The weighing apparatus described incorporates half-bridge or full-bridge load cells and such a weighing apparatus is more economical to manufacture and has a lower profile than prior weighing apparatus of the same general type.

Half-bridge load cells include a pair of strain gages connected in series. Typically, the gages are mounted on a beam or other counterforce so that one gage responds to tensile and the other to compressive strain. To maximize the electrical output of the strain gages, it is desirable to apply the load to such a load cell at a point between the longitudinally spaced gages. This requires the use of a spacer and a bracket to allow the load point to be placed over the gaged beam.

For example, there is disclosed in U.S. Patent 4,261,429 to Lockery a weighing apparatus in which a flexure beam is formed integrally with a plate at each of the four corners of the plate. A pair of strain gages is mounted on each of the beams. The load point for each of the load cells so formed is moved between the strain gages by means of a vertical spacer connected to the free end of the beam and a bracket connected to the spacer and extending parallel to the beam. The use of the spacers and brackets produces, in addition to increased cost, a higher profile weighing apparatus.

European Patent Application No. O,065,176 describes a weighing apparatus comprising a plate in which beams are formed at each of a plurality of locations by slots cut in the plate. The plate is supported by feet and a second plate is supported above. A weight placed on the upper plate causes deflection of the beams. The deflection is measured by transducers attached to the beam, and the measurement is converted to a weight reading.

British Patent No. 1,534,276 describes a force transducer which comprises a planar element having a central aperture into which a re-entrant beam extends from one side. The planar element is clamped opposite to the one side and force applied to the re-entrant portion causes deformation which is measured by strain gages.

The present invention provides weighing apparatus which substantially eliminates the disadvantages discussed above in prior weighing apparatus of the same general type.

The present invention is characterised in that a base plate is provided between the force transmitting means and the foot means, and the support members are formed adjacent each beam by slots in the plate, each support member being spaced laterally from the longitudinal axis of the adjacent beam and having a free end and an opposite end merging with the other end of the adjacent beam, the support members being coupled to the foot means through the force transmitting means and the base plate.

There is provided a weighing apparatus including a plate defining a plane and a flexure beam substantially coplanar with the plate and having a fixed end connected thereto. A support member substantially coplanar with the beam is spaced laterally from the longitudinal axis of the beam and has a free end and an opposite end which is connected to the other end of the beam. Strain sensing means is mounted on the beam.

The support member coplanar with the beam permits the load on the beam to be positioned at a desired location with respect to the strain sensing means without the need for a spacer and bracket. A second beam may be provided to balance any torsion on the first beam. The beam and support member may be constructed integrally and/or may be integral with the plate. In that case, the beam and support member can be formed by cutting slots in the plate.

Brief Description of the Drawings

Figure 1 is a perspective view of a weighing apparatus.

Figure 2 is a plan view of one load cell of the apparatus of Figure 1.

Figure 3 is a side view along line 3-3 of Figure 1.

Figure 4 is a plan view of the load cell of Figure 2 illustrating an alternate placement of the strain gages.

Figure 5 is a plan view of the load cell of Figure 2 illustrating another alternate placement of the strain gages.

Figure 6 is a partial plan view of another embodiment of weighing apparatus.

Figure 7 is a partial plan view of still another embodiment of weighing apparatus.

Figure 8 is a partial plan view of yet another embodiment of weighing.

Figure 9 is a plan view of weighing apparatus incorporating only a single load cell.

Figure 10 is a side view of a scale mechanism embodying weighing apparatus according to this invention.

Figure 11 is a sectional view along line 11-11 of Figure 10.

Figure 12 is a plan view of a large area weighing apparatus.

General Description

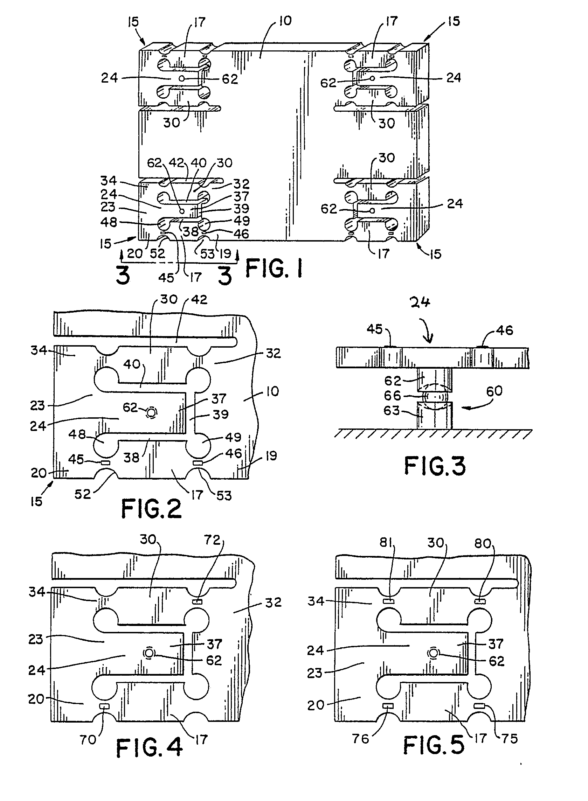

Referring initially to Figures 1-3, there is shown a scale plate 10 of metal, for example, an aluminum alloy for low capacity scales and an alloy steel for scales of higher capacity. The thickness of plate 10 is preferably in the order of about 6mm (0.25''). Plate 10 is provided at each of its corners with an arrangement of slots and holes cut into the plate to define with it a load cell structure generally designated 15. Since all of the load cells are identical only one will be described in detail.

Each load cell 15 includes a flexure beam 17 having an end 19 fixed to and merging with plate 10 and another end 20 fixed rigidly to and merging with an end 23 of a support member 24. The load cell also includes a second beam 30 having an end 32 fixed to and merging with plate 10 and another end 34 fixed to and merging with end 23 of support member 24. Support member 24 also has a free end 37 defined by slots 38, 39 and 40 in plate 10. Flexure beam 30 is defined by slots 40 and 42.

Either or both of beams 17 and 30 may serve as the load sensing member of load cell 15 by providing strain gages thereon. In the exemplary embodiment illustrated in Figures 1-3, strain gages 45 and 46 are mounted only on beam 17 at reduced sections thereof formed by holes 48, 49 and cut-outs 52, 53 in the edges of plate 10. The reduced sections are not required but are often provided since they tend to improve the performance of load sensing members in which they are provided.

While flexure beams 17 and 30 and support member 24 are shown as formed integrally with plate 10 it is not necessary that this be so. Either or both beams or the support member may be rigidly fixed to plate 10 and/or to each other by other suitable means such as welding, adhesive or fasteners, for example, bolts and nuts.

As shown in Figure 3, there extends from support member 24 a force transmitting means 60 which transmits force between the support member and a supporting surface. As shown, the force transmitting means includes a cup 62 suitably affixed to support member 24, a similar cup 63 adapted to rest upon a supporting surface and a ball 66 of the proper radius to be supported between cups 62 and 63. The ball and cup arrangement of force transmitting means 60 substantially eliminates the effects of side loading on the weighing apparatus. Force transmitting means 60 is preferably located on support member 24 between gages 45 and 46. An optimum point for the position of force transmitting means 60, along a line parallel to the longitudinal axis of beam 17, can be determined with a small amount of experimentation. The ball and cup arrangement shown for force transmitting means 60 is usually preferred because it substantially eliminates the effects of side loading. It is not necessary, however, and a rigid means or substantially any means capable of transmitting force between support member 24 and a support surface will suffice.

In operation, the strain gages 45, 46 on beam 17 are connected with the corresponding strain gages of the load cells 15 at the remaining corners of plate 10 to form one or more Wheatstone Bridge circuits in a known manner. A load or weight placed on plate 10 produces an S-shaped bending pattern and tensile and compressive strains in each beam 17. The strains are sensed by strain gages 45 and 46 to produce an electrical signal at the bridge output proportional to the weight on plate 10.

Support member 24 permits the load on each load cell 15 to be applied between gages 45 and 46, but spaced transversely therefrom, without the need for a vertical spacer and bracket as required in prior art arrangements such as that shown in U.S. Patent No. 4,261,429. The additional flexure beam 30, though not absolutely necessary, is of advantage in that it balances the torque applied to beam 17 as a result of the loading point being off-set transversely from the longitudinal axis of beam 17. Twisting of beam 17 and resulting torsional strain errors are thereby substantially eliminated. Since a vertical spacer and bracket are no longer required, a weighing scale utilizing plate 10 and load cells 15 may be lower in cost as well as having a lower profile than prior art arrangements. The lower profile permits such a scale to be used in applications where the prior art scale would not be satisfactory or desirable.

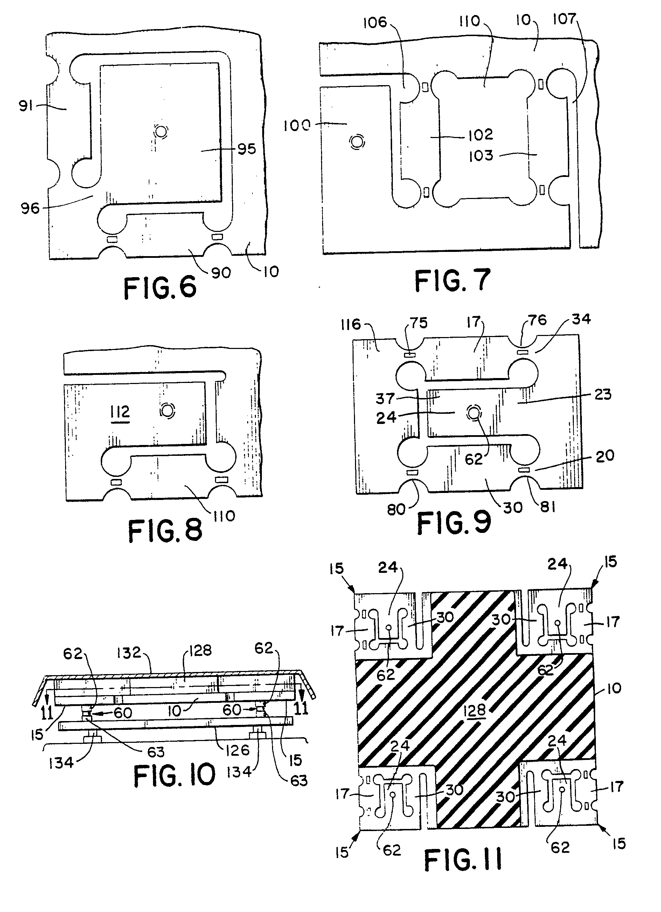

Figures 4 and 5 show arrangements of load cell 15 in which both beams 17 and 30 are used as load responsive members. In Figure 4, one strain gage 70 is mounted on a reduced section of beam 17 adjacent end 20 and another gage 72 is mounted on a reduced section of beam 30 adjacent its fixed end 32.

In Figure 5, both beam 17 and beam 30 are provided with pairs of longitudinally spaced strain gages, identified as 75, 76 on beam 17 and 80, 81 on beam 30. The load cells become dual rather than single beam and full-bridge rather than half-bridge load cells.

Figures 6 to 8 illustrate alternate designs of the flexure beam and support member arrangement. In Figure 6, beam members 90 and 91 are formed on mutually perpendicular edges of plate 10 and support member 95 merges at one corner 96 with the common merged ends of beams 90 and 91.

In Figure 7, support member 100 is formed at an edge of plate 10 with beams 102 and 103 formed adjacent thereto by slots 106 and 107 and rectangular cut-out portion 110.

The alternate embodiments of Figures 6 and 7 operate in substantially the same manner as the embodiment of Figures 1 to 3. Either or both of the flexure beams may be provided with strain gages as described above.

In Figure 8, only one flexure beam 110 is provided along with support member 112. The absence of a second flexure beam such as beam 30 in Figure 2 results in a slight cost reduction and a reduction in performance from the absence of the torque balancing effect.

Figure 9 illustrates an embodiment of the invention in which a plate 116 is provided with only a single load cell, the load cell shown being that of Figure 5. The single load cell includes beams 17 and 30 and support member 24. The flexure beam 17 is provided with strain gages 75, 76 while beam 30 is provided with gages 80 and 81. Other load cell configurations, either half-bridge or full-bridge, could, of course, be used as the single load cell with plate 116. The embodiment of Figure 9, can, in certain circumstances, be used alone as the major part of a scale mechanism. In other applications, plate 116 could be joined or affixed rigidly to other plate and load cell arrangements to provide different configurations of weighing mechanisms.

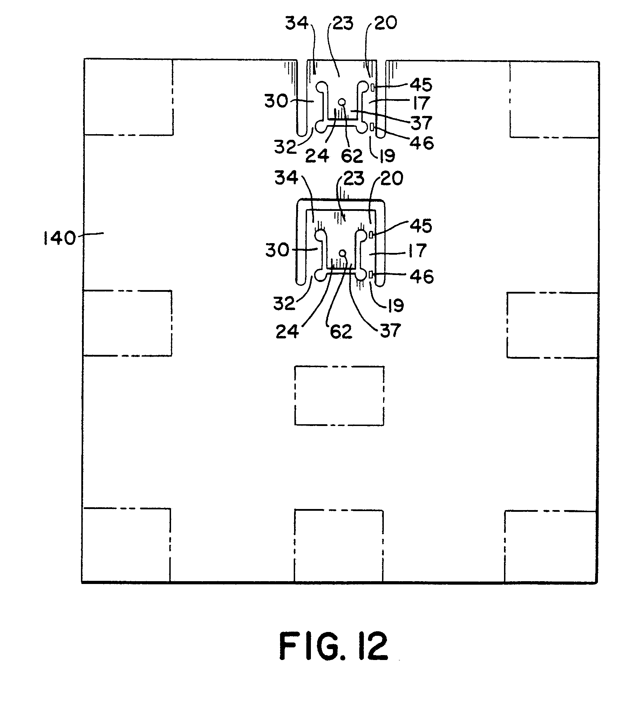

Figures 10 and 11 illustrate the embodiment of Figures 1 to 3 in a scale mechanism. The plate 10 with four half-bridge load cells 15 is supported on a base 126 by force transmitting means 60 extending from the support member 24 of each load cell. A resilient shock pad 128 made of an elastomeric or other suitable material is placed over plate 10 with the portions over the load cells 15 removed as shown in Figure 11 to confine the load to plate 10. A protective cover 132 of aluminum, for example, is provided over the shock pad. Base plate 126 is provided with a number (usually four) of feet 134 which support the scale mechanism on the surface on which it will be used. Base plate 126 is of advantage in that it provides a constant or invariable supporting surface for the load cells and the force transmitting means 60. Base plate 126 and feet 134 are of particular advantage when the scale may be moved from place to place and used on different supporting surfaces. The base plate and feet, along with the shock pad and cover, also serve to protect the scale from mishandling and abuse.

The positions of feet 134 with respect to the gaged beams 17 (and/or beams 30 when they are gaged) affects the performance of the scale. The first approach to obtaining optimum performance is to position the respective feet 134 directly beneath the gaged beams 17 (or 30) between the strain gages on the beams. When both beams 17 and 30 are gaged, the respective feet should be positioned between the beams and between the gages. Other locations may, however, prove more beneficial and a small amount of experimentation should determine the optimum locations for the feet in different scale configurations.

In Figure 12 there is shown a plate 140 of large area and having a multiplicity of load cells of the design of Figure 2 formed therein, in the body and sides of the plate as well as at the corners. The embodiment of Figure 12 could be used in, for example, trunk scales or other applications requiring a substantial number of load cells distributed over a relatively large area.

Any adjustment required for off-center loading in a weighing mechanism according to the present invention can be accomplished in accordance with the procedures described in copending U.S. Patent Application Serial No. 408,830, filed August 17, 1982 (EP-A2-101247).

**Claims**

1. Weighing apparatus comprising a plate (10), a beam (17,30; 90,91; 102, 103; 110) formed at each of a plurality of locations by slots (38,40,42) cut in the plate (10), each beam having a fixed end (19) merging with the plate (10) and having another end (20), and strain sensing means (45,46; 70,72; 75,76,80,81) on each beam, a support member (24; 95; 100;112) connected to the other end (20) of each beam, force transmitting means (60) coupled to each support member, and foot means (134) supporting the weighing apparatus, characterised in that a base plate (126) is provided between the force transmitting means (60) and the foot means (134), and the support members (24,95,100,112) are formed adjacent each beam by slots (38,39,40,106,107) in the plate, each support member being spaced laterally from the longitudinal axis of the adjacent beam and having a free end (37) and an opposite end (23) merging with the other end (20) of the adjacent beam, the support members being coupled to the foot means (134) through the force transmitting means (60) and the base plate (126).

2. Weighing apparatus according to claim 1, characterised in that said strain sensing means (45,46; 70,72,75, 76,80,81) comprises a pair of longitudinally spaced strain gages and said force transmitting means (60) is located on said support member (24; 95; 100, 112) between and spaced laterally from said strain gages.

3. Weighing apparatus according to claim 1, characterised in that said force transmitting means (60) includes a first cup (62) connected to said support member (24; 95; 100; 112), a second cup (63) connected to said base plate (126) and a ball (66) adapted to fit between said first and second cups (62,63) to permit limited relative movement of said cups in a direction parallel to the plane of said support member.

4. Weighing apparatus according to any of the preceding claims, characterised by a second beam (30; 91; 103) formed adjacent each support member (24; 95; 100) by slots (38,40,42) in said plate (10), said second beam having a fixed end (32) connected to said plate (10) and having another end (34) connected to said opposite end (23) of said support member (24; 95; 100).

5. Weighing apparatus according to claim 4, characterised in that said second beam (30; 103) is parallel to said first beam (17; 102).

6. Weighing apparatus according to claim 4 or 5, characterised in that said support member (24) is between said beams (17,30).

7. Weighing apparatus according to any of claims 4 to 6, characterised by strain sensing means (80,81) on said second beam (30; 103).

8. Weighing apparatus according to claim 7, characterised in that said strain sensing means on one beam (30) comprises a strain gage (72) mounted on the beam (30) adjacent its fixed end (32), and said strain sensing means on the other beam (17) comprises a strain gage (70) mounted on the other beam (17) adjacent its other end (20).

9. Weighing apparatus according to claim 7, characterised in that said strain sensing means on each of said first and second beams (17,30; 102, 103) comprises a pair of longitudinally spaced strain gages (75,76; 80,81) mounted on each of said beams.

10. Weighing apparatus according to any of claims 7 to 9, characterised in that the force transmitting means (60) on said support member is spaced laterally from each beam (17,30) and located between the fixed end and the other end of said beam.

11. Weighing apparatus according to claim 1, characterised by a first slot (38; 106) in said plate (10), a second slot (40; 107) in said plate parallel to and spaced from said first slot (38; 106), a third slot (39) in said plate at an angle to said first and second slots (38,40) and connecting with at least one of said slots (38,40), said slots (38-40; 106,107) being used in forming one of the beams (17; 90; 102; 110) and one of the support members (24,95,100,112) in said plate, said support member (24,95,100,112) having a free end (37) and having another end (23) merging with an end (20) of said beam, said beam having its other end (19) merging with said plate, strain sensing means (45,46) being located on said beam, said plate (10) having an edge parallel to said first slot, said third slot extending from said edge to said first slot and defining therewith said support member (100) and said first and second slots defining said beam (102).

12. Weighing apparatus according to claim 1, characterised by a first slot (38; 106) in said plate (10), a second slot (40; 107) in said plate parallel to and spaced from said first slot (38; 106), a third slot (39) in said plate at an angle to said first and second slots (38,40) and connecting with at least one of said slots (38,40), said slots (38-40; 106,107) being used in forming one of the beams (17; 90; 102) and one of the support members (24,95,100,112) in said plate, said support member (24,95,100) having a free end (37) and having another end (23) merging with an end (20) of said beam, said beam having its other end (19) merging with said plate, strain sensing means (45,46; 70) being located on said beam, and there being a fourth slot (42) in said plate (10), said fourth slot (42) being included in forming a second flexure beam (30) having a fixed end (32) merging with said plate (10) and another end (34) merging with said another end (23) of the support member (24).

13. Weighing apparatus according to claim 12, wherein said plate has an edge parallel to said first slot (38), said first slot (38) and said plate edge defining said beam (17), said third slot (39) joining said first and second slots (38,40) and defining therewith said support member (24).

14. Weighing apparatus according to any of claims 11 to 13, characterised in that said third slot (39) extends substantially at right angles to said first and second slots (38,40).

15. Weighing apparatus according to any of claims 12 to 14 characterised in strain sensing means (72; 80,81) on said second beam (30) and in that said strain sensing means on one beam (30) comprises a strain gage (72) mounted on the beam (30) adjacent its fixed end (32), and said strain sensing means on the other beam (17) comprises a strain gage (70) mounted on the other beam (17) adjacent its other end (20).

## Patentansprüche

1. Wägevorrichtung, mit einer Platte (10), einem an jeder von mehreren Stellen durch in die Platte (10) eingearbeitete Schlitze (38,40,42) gebildeten Träger (17,30;90,91;102,103;110), wobei jeder Träger ein in die Platte übergehendes festes Ende (19) und ein anderes Ende (20) aufweist und auf jedem Träger Dehnungssensormittel (45,46;70,72;75,76,80,81) vorhanden sind, mit einem mit dem anderen Ende (20) jedes Trägers verbundenen Tragglied (24;95;100;112), mit Kraftübertragungsmitteln (60), die an jedes Tragglied angesetzt sind, und mit die Wägevorrichtung unterstützenden Fußmitteln (134), dadurch gekennzeichnet, daß zwischen den Kraftübertragungsmitteln (60) und den Fußmitteln (134) eine Basisplatte (126) vorhanden ist und die Tragglieder (24,95,100,112) durch Schlitze (38,39,40,106,107) in der Platte jedem Träger benachbart gebildet sind, wobei jedes Tragglied mit Querabstand zur Längsachse des benachbarten Trägers angeordnet ist und ein freies Ende (37) sowie ein in das andere Ende (20) des benachbarten Trägers übergehendes entgegengesetztes Ende (23) besitzt und wobei die Tragglieder durch die Kraftübertragungsmittel (60) und die Basisplatte (126) mit den Fußmitteln (134) verbunden sind.

2. Wägevorrichtung nach Anspruch 1, dadurch gekennzeichnet, daß die Dehnungssensormittel (45,46;70,72;75,76,80,81) ein Paar von in Längsrichtung mit Abstand zueinander angeordneten Dehnungsmessern enthalten und die Kraftübertragungsmittel (60) auf dem Tragglied (24;95;100,112) zwischen und mit Querabstand zu den Dehnungsmessern angeordnet sind.

3. Wägevorrichtung nach Anspruch 1, dadurch gekennzeichnet, daß die Kraftübertragungsmittel (60) eine erste Pfanne (62), die mit dem Tragglied (24;95;100;112) verbunden ist, eine zweite Pfanne (63), die mit der Basisplatte (126) verbunden ist, und eine zwischen die erste und die zweite Pfanne (62,63) einsetzbare Kugel (66) enthalten, um eine begrenzte Relativbewegung der Pfannen in einer zur Ebene des Tragglieds parallelen Richtung zu ermöglichen.

4. Wägevorrichtung nach einem der vorhergehenden Ansprüche, gekennzeichnet durch einen zweiten Träger (30;91;103), der jedem Tragglied (24;95;100) benachbart durch Schlitze (38,40,42) in der Platte (10) gebildet ist, wobei der zweite Träger ein mit der Platte (10) verbundenes festes Ende (32) und ein mit dem entgegengesetzten Ende (23) des Traggliedes (24;95;100) verbundenes anderes Ende (34) aufweist.

5. Wägevorrichtung nach Anspruch 4, dadurch gekennzeichnet, daß der zweite Träger (30;103) parallel zum ersten Träger (17;102) verläuft.

6. Wägevorrichtung nach Anspruch 4 oder 5, dadurch gekennzeichnet, daß das Tragglied (24) zwischen den Trägern (17,30) angeordnet ist.

7. Wägevorrichtung nach einem der Ansprüche 4 bis 6, gekennzeichnet durch Dehnungssensormittel (80,81) auf dem zweiten Träger (30;103).

8. Wägevorrichtung nach Anspruch 7, dadurch gekennzeichnet, daß die Dehnungssensormittel auf einem Träger (30) einen auf dem Träger (30) in der Nachbarschaft seines festen Endes (32) befestigten Dehnungsmesser (72) und die Dehnungssensormittel auf dem anderen Träger (17) einen auf dem Träger (17) in der Nachbarschaft seines anderen Endes (20) befestigten Dehnungsmesser (70) enthalten.

9. Wägevorrichtung nach Anspruch 7, dadurch gekennzeichnet, daß die Dehnungssensormittel auf jedem ersten und zweiten Träger (17;30;102,103) ein Paar von in Längsrichtung mit Abstand zueinander auf jedem der Träger befestigten Dehnungsmessern (75,76;80,81) enthalten.

10. Wägevorrichtung nach einem der Ansprüche 7 bis 9, dadurch gekennzeichnet, daß die Kraftübertragungsmittel (60) an dem Tragglied von jedem Träger (17,30) in Querrichtung beabstandet und zwischen dem festen Ende und dem anderen Ende des Trägers angeordnet sind.

11. Wägevorrichtung nach Anspruch 1, gekennzeichnet durch einen ersten Schlitz (38;106) in der Platte (10), einen mit Abstand zum ersten Schlitz (38;106) parallel zu diesem verlaufenden zweiten Schlitz (40;107) in der Platte, einen zum ersten und zweiten Schlitz (38,40) winkeligen und mit mindestens einem der Schlitze (38,40) verbundenen dritten Schlitz (39) in der Platte, wobei die Schlitze (38-40;106,107) zur Bildung eines der Träger (17;90;102;110) und eines der Tragglieder (24,95,100,112) in der Platte verwendet werden, wobei das Tragglied (24,95,100,112) ein· freies Ende (37) und ein in ein Ende (20) des Trägers übergehendes anderes Ende (23) aufweist, wobei das andere Ende (19) des Trägers in die Platte übergeht, wobei Dehungssensormittel (45,46) auf dem Träger angeordnet sind, wobei die Platte (10) eine zum ersten Schlitz parallele Kante aufweist, wobei der dritte Schlitz von der Kante zum ersten Schlitz verläuft und mit diesem das Tragglied (100) definiert und wobei der erste und der zweite Schlitz den Träger (102) definieren.

12. Wägevorrichtung nach Anspruch 1, gekennzeichnet durch einen ersten Schlitz (38;106) in der Platte (10), einen mit Abstand zum ersten Schlitz (38;106) parallel zu diesem verlaufenden zweiten Schlitz (40;107) in der Platte, einen zum ersten und zweiten Schlitz (38,40) winkeligen und mit mindestens einem der Schlitze (38,40) verbundenen dritten Schlitz (39) in der Platte, wobei die Schlitze (38-40;106,107) zur Bildung eines der Träger (17;90;102) und eines der Tragglieder (24,95,100,112) in der Platte verwendet werden, wobei das Tragglied (24,95,100) ein freies Ende (37) und ein in ein Ende (20) des Trägers übergehendes anderes Ende (23) aufweist, wobei das andere Ende (19) des Trägers in die Platte übergeht, wobei Dehungssensormittel (45,46,70) auf dem Träger angeordnet sind, und wobei ein vierter Schlitz (42) in der Platte (10) vorhanden ist, der zur Bildung eines zweiten Biegeträgers (30) dient, der ein in die Platte (10) übergehendes festes Ende (32) und ein in das andere Ende (23) des Tragglieds (24) übergehendes anderes Ende (34) aufweist.

13. Wägevorrichtung nach Anspruch 12, bei der die Platte eine zum ersten Schlitz (38) parallele Kante aufweist, der erste Schlitz (38) und die Plattenkante den Träger (17) definieren und der dritte Schlitz (39) mit dem ersten und dem zweiten Schlitz (38,40) verbunden ist und mit diesen das Tragglied (24) definiert.

14. Wägevorrichtung nach einem der Ansprüche 11 bis 13, dadurch gekennzeichnet, daß der dritte Schlitz (39) im wesentlichen rechtwinkelig zum ersten und zweiten Schlitz (38,40) verläuft.

15. Wägevorrichtung nach einem der Ansprüche 12 bis 14, dadurch gekennzeichnet, daß auf dem zweiten Träger (30) Dehnungssensormittel (72;80,81) vorhanden sind und daß die Dehnungssensormittel auf einem Träger (30) einen auf dem Träger (30) in der Nachbarschaft seines festen Endes (32) befestigten Dehnungsmesser (72) und die Dehnungssensormittel auf dem anderen Träger (17) einen auf dem Träger (17) in der Nachbarschaft seines anderen Endes (20) befestigten Dehnungsmesser (70) enthalten.

**Revendications**

1. Dispositif de pesage comprenant une plaque (10), un fléau (17,30;90,91; 102,103; 110) formé en chacun d'une pluralité d'endroits par des encoches (38,40,42) pratiquées dans la plaque (10), chaque fléau présentant une extrémité fixe (19) confondue avec la plaque (10) et présentant une autre extrémité (20), et des moyens de détection de contrainte (45,46; 70,72; 75,76,80,81) sur chaque fléau, un élément de support (24; 95; 100; 112) relié à l'autre extrémité (20) de chaque fléau; un moyen de transmission de force (60) accouplé à chaque élément de support, et des pieds (134) supportant le dispositif de pesage, caractérisé en ce qu'une plaque de base (126) est prévue entre le moyen de transmission de force (60) et les pieds (134), et les éléments de support (24, 95,100,112) sont formés au voisinage de chaque fléau par des encoches (38,39,40,106,107) pratiquées dans la plaque, chaque élément de support étant espacé latéralement de l'axe longitudinal du fléau voisin et possédant une extrémité libre (37) et une extrémité opposée (23) confondue avec l'autre extrémité (20) du fléau voisin, les éléments de support étant accouplés aux pieds (134) par l'intermédiaire du moyen de transmission de force (60) et de la plaque de base (126).

2. Dispositif de pesage selon la revendication 1, caractérisé en ce que ledit moyen de détection de contrainte (45,46; 70,72,75,76,80,81) comprend une paire de jauges de contrainte longitudinalement espacées, et ledit moyen de transmission de force (60) est situé sur ledit élément de support (24; 95; 100, 112) entre lesdites jauges de contrainte, et espacé latéralement de ces dernières.

3. Dispositif de pesage selon la revendication 1, caractérisé en ce que ledit moyen de transmission de force (60) comprend une première coupelle (62) reliée audit élément de support (24; 95; 100; 112), une deuxième coupelle (63) reliée à ladite plaque de base (126), et une bille (66) conçue pour s'adapter entre lesdites première et deuxième coupelles (62,63) pour permettre un déplacement relatif limité desdites coupelles dans une direction parallèle au plan dudit élément de support.

4. Dispositif de pesage selon une quelconque des revendications précédentes, caractérisé par un deuxième fléau (30; 91; 103) formé au voisinage de chaque élément de support (24; 95; 100) par des encoches (38,40,42) pratiquées dans ladite plaque (10), ledit deuxième fléau possédant une extrémité fixe (32) reliée à ladite plaque (10) et possédant une autre extrémité (34) reliée à ladite extrémité opposée (23) dudit élément de support (24;95;100).

5. Dispositif de pesage selon la revendication 4, caractérisé en ce que ledit deuxième fléau (30; 103) est parallèle audit premier fléau (17; 102).

6. Dispositif de pesage selon la revendication 4 ou 5, caractérisé en ce que ledit élément de support (24) se trouve entre lesdits fléaux (17,30).

7. Dispositif de pesage selon selon une quelconque des revendications 4 à 6, caractérisé par des moyens de détection de contrainte (80,81) sur ledit deuxième fléau (30; 103).

8. Dispositif de pesage selon la revendication 7, caractérisé en ce que ledit moyen de détection de contrainte prévu sur un fléau (30) comprend une jauge de contrainte (72) montée sur le fléau (30) au voisinage de son extrémité fixe (32), et ledit moyen de détection de contrainte prévu sur l'autre fléau (17) comprend une jauge de contrainte (70) montée sur l'autre fléau (17) au voisinage de son autre extrémité (20).

9. Dispositif de pesage selon la revendication 7, caractérisé en ce que ledit moyen de détection de contrainte prévu sur chacun desdits premier et deuxième fléaux (17,30; 102,103) comprend une paire de jauges de contrainte longitudinalement espacées (75,76; 80,81) montée sur chacun desdits fléaux.

10. Dispositif de pesage selon une quelconque des revendications 7 à 9, caractérisé en ce que le moyen de transmission de force (60) prévu sur ledit élément de support est espacé latéralement de chaque fléau (17, 30) et situé entre l'extrémité fixe et l'autre extrémité dudit fléau.

11. Dispositif de pesage selon la revendication 1, caractérisé par une première encoche (38; 106) dans ladite plaque (10), une deuxième encoche (40; 107) dans ladite plaque parallèle à et distante de ladite première encoche (38; 106), une troisième encoche (39) dans ladite plaque faisant un angle avec lesdites première et deuxième encoches (38,40) et en liaison avec au moins une desdites encoches (38,40), lesdites encoches (38,40; 106,107) étant utilisées pour former un des fléaux (17; 90; 102; 110) et un des éléments de support (24,95,100,112) dans ladite plaque, ledit élément de support (24,95,100,112) possédant une extrémité libre (37) et possédant une autre extrémité (23) confondue avec une extrémité (20) dudit fléau, ledit fléau ayant son autre extrémité (19) confondu avec ladite plaque, des moyens de détection de contrainte (45,46) étant situés sur ledit fléau, ladite plaque (10) ayant un bord parallèle à ladite première encoche, ladite troisième encoche s'étendant depuis ledit bord jusqu'à ladite première encoche et définissant avec cette dernière ledit élément de support (100), et lesdites première et deuxième encoches définissant ledit fléau (102).

12. Dispositif de pesage selon la revendication 1, caractérisé par une première encoche (38; 106) dans ladite plaque (10), une deuxième encoche (40; 107) dans ladite plaque parallèle à et distante de ladite première encoche (38; 106), une troisième encoche (39) dans ladite plaque faisant un angle avec lesdites première et deuxième encoches (38,40) et en liaison avec au moins une desdites encoches (38,40), lesdites encoches (38,40; 106,107) étant utilisées pour former un des fléaux (17; 90; 102) et un des éléments de support (24,95,100,112) dans ladite plaque, ledit élément de support (24,95,100) possédant une extrémité libre (37) et possédant une autre extrémité (23) confondue avec une extrémité (20) dudit fléau, ledit fléau ayant son autre extrémité (19) confondue avec ladite plaque, des moyens de détection de contrainte (45,46; 70) étant situés sur ledit fléau, et une quatrième encoche (42) étant prévue dans ladite plaque (10), ladite quatrième encoche (42) étant comprise pour former un deuxième fléau de flexion (30) possédant une extrémité fixe (32) confondu avec ladite plaque (10) et une autre extrémité (34) confondue avec ladite autre extrémité (23) de l'élément de support (24).

13. Dispositif de pesage selon la revendication 12, dans lequel ladite plaque a un bord parallèle à ladite première encoche (38), ladite première encoche (38) et ledit bord de la plaque définissant ledit fléau (17), et ladite troisième encoche (39) réunissant lesdites première et deuxième encoches (38,40) et définissant avec ces dernières ledit élément de support (24).

14. Dispositif de pesage selon une quelconque des revendications 11 à 13, caractérisé en ce que ladite troisième encoche (39) s'étend sensiblement à angles droits desdites première et deuxième encoches (38,40).

15. Dispositif de pesage selon une quelconque des revendications 12 à 14, caractérisé par des moyens de détection de contrainte (72; 80,81) sur ledit deuxième fléau (30), et en ce que ledit moyen de détection de contrainte prévu sur un fléau (30) comprend une jauge de contrainte (72) montée sur le fléau (30) au voisinage de son extrémité fixe (32), et ledit moyen de détection de contrainte prévu sur l'autre fléau (17) comprend une jauge de contrainte (70) montée sur l'autre fléau (17) au voisinage de son autre extrémité (20).

FIG. I

FIG.2

FIG.3

FIG. 4

FIG. 5

1

FIG.6

FIG. 7

FIG.8

FIG.9

FIG. 10

FIG. 11

2

FIG. 12